# EUROPÄISCHE PATENTSCHRIFT

(11) **EP 2 987 598 B1**
(45) Veröffentlichungstag und Bekanntmachung des Hinweises auf die Patenterteilung: **10.04.2019**
(21) Anmeldenummer: 14181336.0
(22) Anmeldetag: 19.08.2014
(51) Int. Cl.: B29C 33/62

(54) **Hybride Dispersion und ihre Verwendung**
Hybrid dispersion and the use of the same
Dispersion hybride et son utilisation

(43) Veröffentlichungstag der Anmeldung: 24.02.2016
(73) Patentinhaber: Evonik Degussa GmbH, 45128 Essen (DE)
(72) Erfinder: Lüthge, Thomas, 19086 Consrade (DE); Balbo Block, Maike Vivian, 22043 Hamburg (DE); Beaman, Andy, Milton Keynes MK7 7SF (GB); Westphal, Gudrun, 19273 Neuhaus (DE); Kluth, Christian, 19243 Wittenburg OT Lehsen (DE); Vuin, Alfred, 45127 Essen (DE)
(74) Vertreter: Evonik Patent Association

(56) Entgegenhaltungen:
- EP-A2- 0 164 501
- WO-A1-2008/139595
- DE-A1- 4 410 710
- DE-C1- 3 842 650
- DE-C1- 19 824 279

## Beschreibung

Die Erfindung betrifft eine Dispersion enthaltend ein Dispersionsmittel (Phase I) und eine disperse flüssige Phase II, welche dadurch gekennzeichnet ist, dass beide Phasen I und II eine weitere dispergierte Phase III enthalten und diese dispergierte Phase III ein trennaktives Mittel umfasst, ein Verfahren zur Herstellung der Dispersion und die Verwendung als oder zur Herstellung von Lacken, Farben, Polymerdispersionen und Trennmitteln.

Es sind zahlreiche Trennmittel, insbesondere zur Verwendung bei der Herstellung von Polyurethan-Formkörpern bekannt.

DE 102005059142 A1 betrifft Trennmittel-Dispersionen für die Herstellung von Polyurethan-Formkörpern enthaltend im Wesentlichen mindestens ein trennaktives Mittel aus der Gruppe der Seifen, Öle, Wachse und Silikone, Talkum, ein Verdickungsmittel und organisches Lösungsmittel.

DE 102005054036 A1 betrifft wässrige Dispersionen, enthaltend trennaktive Mittel, Emulgatoren und übliche Hilfs- und Zusatzmittel, wobei als trennaktive Mittel eine Kombination aus mindestens einem trennaktiven Mittel ausgesucht aus der Gruppe Seifen, Öle, Wachse und Silikonen und Talkum verwendet wird.

DE 102005054034 A1 betrifft wässrige Dispersionen, enthaltend trennaktive Mittel, Emulgatoren und übliche Hilfs- und Zusatzmittel, wobei als trennaktive Mittel eine Kombination aus mindestens einem trennaktiven Mittel ausgesucht aus der Gruppe Seifen, Öle, Wachse und Silikonen und Polyester verwendet wird.

DE 102005054033 A1 betrifft wässrige Dispersionen, enthaltend trennaktive Mittel, Emulgatoren und übliche Hilfs- und Zusatzmittel, wobei als trennaktive Mittel eine Kombination aus mindestens einem trennaktiven Mittel ausgesucht aus der Gruppe Seifen, Öle, Wachse und Silikonen und Polyisobutylen, verwendet wird.

DE 102005021059 A1 betrifft ein Verfahren zur Herstellung von kompakten cellulosehaltigen Formkörpern durch Umsetzung von gegebenenfalls modifizierten organischen Polyisocyanaten mit Cellulose, insbesondere Lignocellulose, in Gegenwart von Formtrennmitteln in einem offenen oder geschlossenen Formwerkzeug, wobei als Formtrennmittel Aminopropylgruppen enthaltende Siloxanverbindungen verwendet werden.

DE 102006040009 A1 betrifft wässrige Trennmittel-Dispersionen für die Herstellung von Polyurethan-Formkörpern enthaltend im Wesentlichen: mindestens ein trennaktives Mittel aus der Gruppe der Seifen, Öle, Wachse und Silikone und Emulgatoren und gegebenenfalls Schaumstabilisatoren und gegebenenfalls Viskositätsmodifizierer und gegebenenfalls Hilfs- und Zusatzstoffe und mindestens ein Bismutcarboxylat und Wasser.

DE 102006026870 A1 betrifft Trennmittel-Dispersionen für die Herstellung von Polyurethan-Formkörpern enthaltend im Wesentlichen mindestens ein trennaktives Mittel aus der Gruppe der Seifen, Öle, Wachse und Silkone und mindestens ein Bismutcarboxylat und organisches Lösungsmittel und gegebenenfalls übliche Hilfs- und Zusatzstoffe.

DE 102007033430 A1 betrifft ein Schneidöl enthaltend mindestens ein Polyalkylenglykol und ggf. Lösungsmittel und ggf. weitere Hilfs- und Zusatzstoffe, sowie dessen Verwendung zum Sägen von Polyurethanschäumen.

DE 102007037571 A1 betrifft wässrige Trennmittelzusammensetzungen, die als trennaktive Mittel zumindest eine Metallseife und zumindest ein Polyalkylenglykol enthalten.

EP 2017053 betrifft Trennmittel für die Herstellung von Polyurethan-Formkörpern enthaltend mindestens ein trennaktives Wachs, mindestens ein trennaktives Öl und ggf. weitere Hilfs- und Zusatzstoffe, mit der Maßgabe, dass das Trennmittel kein Wasser und keine flüchtigen organischen Lösungsmittel aufweist und das trennaktive Öl im Wesentlichen frei von ungesättigten Kohlenwasserstoffen ist.

DE 102007024493 A1 betrifft wässrige Trennmittel-Dispersionen für die Herstellung von Polyurethan-Formkörpern enthaltend im Wesentlichen mindestens ein trennaktives Mittel aus der Gruppe der Seifen, Öle, Wachse und Silikone und Emulgatoren und gegebenenfalls Schaumstabilisatoren und gegebenenfalls Viskositätsmodifizierer und gegebenenfalls Hilfs- und Zusatzstoffe und mindestens eine Alkali- oder Erdalkalicarboxylat und Wasser.

DE 102009047764 A1 betrifft Trennmittelzusammensetzungen, die als Komponenten mindestens ein Phosphat und mindestens eine, zumindest zwei Hydroxyl-Gruppen aufweisende Verbindung mit einem Molekulargewicht von kleiner 250 g/mol enthalten, wobei der Anteil der Komponente a) an der Zusammensetzung von 0,1 bis 70 Gew.-% und der Anteil der Komponente b) von 0,5 bis 90 Gew.-% beträgt, ein Verfahren zur Herstellung von Kompositformkörpern, bei denen diese Trennmittelzusammensetzungen eingesetzt werden, entsprechend erhältliche Kompositformkörper sowie deren Verwendung.

DE 102010031376 A1 betrifft ein Verfahren zur Herstellung von kompakten cellulosehaltigen Formkörpern durch Umsetzung von gegebenenfalls modifizierten organischen Polyisocyanaten mit Cellulose-haltigem Material, insbesondere Lignocellulose-haltigem Material, in Gegenwart von Formtrennmitteln in einem offenen oder geschlossenen Formwerkzeug, wobei ein Formtrennmittel eingesetzt wird, welches spezielle funktionalisierte Alkyl- oder Alkoxygruppen aufweisende Siloxanverbindungen und mindestens ein Phosphat bzw. Phosphorsäureester enthält, entsprechende Formtrennmittel und die mit dem erfindungsgemäßen Verfahren erhältlichen Formkörper.

WO 2008/139595 A1 offenbart eine Zusammensetzung, enthaltend ein Trennmittel, lipophiles und hydrophiles Lösungsmittel, Tensid, öllösliches Oligomer und Wasser. Sie wird erhalten durch Bereitstellung von wässriger und öliger Phase und Zugabe des Trennmittels.

DE 198 24 279 C1 offenbart ein Trennmittel, enthaltend Wachs und Silikon, in einem Träger, wobei der Träger in Form einer Wasser-in-Öl Dispersion vorliegt. Sie wird dadurch erhalten, dass zunächst getrennt eine erste Mischung aus Wasser und ggf. wenigstens einem Teil eines Tensides und eine zweite und ggf. dritte Mischung, die Kohlenwasserstoffe, die trennwirksamen Substanzen und die anderen Additive enthält, hergestellt und anschließend die zweite und ggf. dritte Mischung langsam in der ersten Mischung dispergiert werden.

Für den Übergang von lösemittelhaltigen zu rein wasserbasierten Dispersionen, werden Produkte mit zwei nicht mischbaren Lösemitteln benötigt. Bisher konnten Dispersionen mit zwei Lösemitteln nur mit bestimmten Lösemittelverhältnissen hergestellt werden, wenn in einem der Lösemittel keine weiteren Inhaltsstoffe dispergiert vorliegen. Bei der Herstellung wurde eine Dispersion in einem Lösemittel hergestellt und dann in ein zweites Lösemittel eindispergiert. Solche Dispersionen werden z. B. als Trennmittel von der Firma Evonik Gorapur GmbH, z. B. unter der Typenbezeichnung LK 8700-7BW, vertrieben.

Aufgabe der vorliegenden Erfindung war die Bereitstellung von Dispersionen, die auf zwei nicht mischbaren Lösemitteln oder Lösemittelgemischen basieren.

Überraschenderweise wurde gefunden, dass Dispersionen auf einfache Weise aus zwei nicht mischbaren Phasen erzeugt werden können, wenn in einer oder beiden Phasen vor der Mischung dieser mindestens ein trennaktives Mittel, insbesondere ein Wachs und gegebenenfalls weitere Zusatzstoffe, wie z. B. ein oder mehrere Emulgatoren dispergiert wurden.

Gegenstand der vorliegenden Erfindung sind deshalb Dispersionen enthaltend ein Dispersionsmittel (Phase I) und eine disperse flüssige Phase II, welche dadurch gekennzeichnet ist, dass beide Phasen I und II eine weitere dispergierte Phase III enthalten und diese dispergierte Phase III ein trennaktives Mittel umfasst.

Ebenfalls Gegenstand der vorliegenden Erfindung ist ein Verfahren zur Herstellung der Dispersionen und deren Verwendung als oder zur Herstellung von Lacken, Farben, Polymerdispersionen und Trennmitteln.

Die erfindungsgemäßen Dispersionen haben den Vorteil, dass mit ihnen erstmals Dispersionen bereitgestellt werden können, die zwei nicht miteinander mischbare Lösemittel oder Lösemittelgemische aufweisen, homogen dispergiert aufweisen, in denen jeweils gleiche oder verschiedene Inhaltstoffe gelöst und/oder dispergiert vorliegen.

Die erfindungsgemäßen Dispersionen sind stabiler als herkömmliche Dispersionen.

Die erfindungsgemäßen Dispersionen zeigen außerdem Vorteile bei der Applizierung, da herkömmliche Dispersionen mit hohem Wasseranteil nur schwierig, z.B. mit elektrostatischen Sprüheinrichtungen zu applizieren sind. So sollte der spezifische Widerstand von Dispersionen, die mit elektostatischen Sprüheinrichtungen appliziert werden sollen, vorzugsweise nicht niedriger als 5 MOhm/cm sein.

Durch den möglichen hohen Anteil an Lösemittelphasen mit Inhaltsstoffen, insbesondere trennaktiven Mitteln, bevorzugt Wachsen, kann eine Verbesserung der Filmbildung im Werkzeug erzielt werden.

Die erfindungsgemäßen Dispersionen sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Die erfindungsgemäßen Dispersionen enthaltend ein Dispersionsmittel (Phase I) und eine disperse flüssige Phase II, zeichnen sich dadurch aus, dass beide Phasen I und II eine weitere dispergierte Phase III enthalten und diese dispergierte Phase III ein trennaktives Mittel umfasst. Sind mehr als eine dispergierte Phase III vorhanden, so können diese unterschiedliche trennaktive Mittel aufweisen.

Vorzugsweise sind die zwei Phasen I und II bei Raumtemperatur zu nicht mehr als 0,5 Gew.-% bezogen auf die jeweils andere Phase ineinander löslich (also ohne Ausbildung einer Phasengrenze mischbar). Die Summe der Anteile der Phasen I und II (ohne Phase(n) III) an der erfindungsgemäßen Dispersion beträgt vorzugsweise größer-gleich 50 Gew.-%, bevorzugt größer-gleich 80 Gew.-%, besonders bevorzugt größer-gleich 85 Gew.-% und ganz besonders bevorzugt größer-gleich 90 Gew.-%.

Das Massenverhältnis von Phase I zu Phase II (ohne evtl. vorhandene Phase(n) III) beträgt in der erfindungsgemäßen Dispersionen vorzugsweise von 1 zu 100 bis 100 zu 1, bevorzugt von 1 zu 5 bis 5 zu 1, besonders bevorzugt 1 zu 2 bis 2 zu 1 und ganz besonders bevorzugt 1 zu 1,2 bis 1,2 zu 1.

In der erfindungsgemäßen Dispersion besteht Phase II vorzugsweise zu mehr als 55 Gew.-% aus Wasser. In dem Wasser können weitere Substanzen, wie z. B. Emulgatoren, Spreitungshilfsmittel, Biozide und unpolare Additive wie Mineralöle gelöst oder dispergiert vorliegen. Der Anteil der im Wasser gelösten Substanzen beträgt vorzugsweise maximal 10 Gew.-%, bevorzugt maximal 1 Gew.-% bezogen auf die Summe aus Wasser und gelösten Substanzen.

Phase I besteht in den erfindungsgemäßen Dispersionen vorzugsweise zu mehr als 75 Gew.-% aus einem Kohlenwasserstoff oder Kohlenwasserstoffgemisch. Bevorzugte Kohlenwasserstoffe oder Kohlenwasserstoffgemische sind solche, die einen Flammpunkt von 25 bis 750 °C, bevorzugt 50 bis 500 °C, besonders bevorzugt von 50 bis 75 °C aufweisen. Die in Phase I eingesetzten Kohlenwasserstoffe oder Kohlenwasserstoffgemische müssen bei Raumtemperatur als Flüssigkeit vorliegen. Bevorzugt eingesetzte Kohlenwasserstoff(gemisch)e sind z. B. Erdölfraktionen, insbesondere solche die einen Flammpunkt von 50 bis 500 °C, bevorzugt von 50 bis 75 °C aufweisen. Der Flammpunkt wird vorzugsweise in Anlehnung an die in DIN EN ISO 13736 beschriebene Methode ermittelt.

Bei den erfindungsgemäßen Dispersionen enthalten beide Phasen I und II eine dispergierte Phase III. Die trennaktiven Mittel der beiden dispergierten Phasen III können gleich oder unterschiedlich sein. Vorzugsweise sind trennaktiven Mittel der beiden dispergierten Phasen III unterschiedlich. Vorzugsweise enthalten beide Phasen I und II als trennaktives Mittel ein oder mehrere Mikrowachse.

Der Anteil an trennaktiven Mitteln kann in den beiden Phasen I und II identisch oder unterschiedlich sein.

Weist Phase I eine dispergierte Phase III auf, so beträgt der Anteil an Phase III in Phase I vorzugsweise von 0,1 bis 20 Gew.-%, bevorzugt von 1 bis 7,5 Gew.-% bezogen auf die Summe aus Phase I und Phase III.

Weist Phase II eine dispergierte Phase III auf, so beträgt der Anteil an Phase III in der Phase II vorzugsweise von 1 bis 40 Gew.-%, bevorzugt 5 bis 20 Gew.-% bezogen auf die Summe aus Phase II und Phase III.

Als trennaktives Mittel kann die erfindungsgemäße Dispersion alle gängigen trennaktiven Mittel enthalten. Vorzugsweise enthält die erfindungsgemäße Dispersion als trennaktives Mittel ein oder mehrere Wachse. Bevorzugte Wachse sind solche, die eine Erstarrungstemperatur von 25 bis 250 °C, bevorzugt von 30 bis 200 °C und besonders bevorzugt von 40 bis 150 °C aufweisen. Die Bestimmung der Erstarrungstemperatur erfolgt vorzugsweise gemäß dynamischer Differenzkalorimetrie in Anlehnung an DIN EN ISO 11357-3. Die Bestimmungen werden vorzugsweise mit einem DSC- Messplatz mit Peripherie, vom Typ Q 1000 der Fa. TA-Instruments unter Verwendung von Aluminium Standardpfännchen der Fa. TA- Instruments (Best Nr. 900786.901) und einer Micro- Analysenwaage, Sartorius M 3 P durchgeführt. Das Temperaturprogramm hat 2 Aufheiz- und 1 Abkühlphase, die wie folgt eingestellt werden: Aufheizen von 20 - 160°C mit 10K/min, 2 min isothermal bei 160°C, Abkühlen von 160-20°C mit 10 K/min, 2 min isothermal bei 20°C und Aufheizen von 20-160°C mit 10 K/min. Von der homogenisierten Probe werden 10 mg ± 0,5 mg in die Standard- Aluminiumpfännchen eingewogen und auf der Heizplatte durchgeschmolzen. Das Pfännchen wird dann verschlossen und muss nun mindestens 24 h bei Raumtemperatur stehen bleiben. Dann wird in den Deckel des Pfännchens ein kleines Loch gestanzt und die Messung mit dem angegebenen Temperaturprogramm gemäß der Geräteanleitung durchgeführt. Bei der Auswertungen der Kurve wird der Erstarrungspunkt anhand der Abkühlkurve ermittelt. Als Erstarrungspunkt wird die extrapolierte Anfangskristallisationstemperatur T_{eic} angegeben.

Bevorzugt eingesetzte Wachse sind z. B. Fischer-Tropsch-Wachse, Polyethylenwachse, insbesondere unverzweigte Polyethylenwachse, ethoxylierte Polyethylenwachse und Mikrowachse. Unter Mikrowachsen (auch mikrokristalline Wachse genannt) werden Wachse verstanden, die z. B. aus dem Vakuumrückstand der Motorölraffinerie gewonnen werden. Dabei werden durch Anwendung eines spezielles Raffinationsverfahrens (http://de.wikipedia.org/wiki/Raffination) (z. B. Propan-Entasphaltierung) die schweren Rohölkomponenten entfernt. Danach ist der Ablauf (Entparaffinierung, Entölung, Raffination) analog wie bei den anderen Paraffinen oder Wachsen.

Werden als Wachse Polyethylenwachse eingesetzt, so weisen diese vorzugsweise eine Erstarrungstemperatur von 40 bis 140 °C, bevorzugt 50 bis 120 °C auf. Werden als Wachse Mikrowachse eingesetzt, so weisen diese vorzugsweise eine Erstarrungstemperatur von 40 bis 90 °C, bevorzugt 60 bis 80 °C auf. Werden als Wachse ethoxylierte Polyethylenwachse eingesetzt, so weisen diese vorzugsweise eine Erstarrungstemperatur von 40 bis 140°C auf.

Es kann vorteilhaft sein, wenn die erfindungsgemäßen Dispersionen mehr als ein Wachs aufweisen. Vorzugsweise weisen die erfindungsgemäßen Dispersionen ein Mikrowachs und mindestens ein Wachs, welches von dem Mikrowachs verschieden ist, auf.

Der Anteil der Summe an trennaktiven Mitteln an der erfindungsgemäßen Dispersion beträgt vorzugsweise von 0,1 bis 20 Gew.-%, bevorzugt 1 bis 15 Gew.-% und besonders bevorzugt 2 bis 10 Gew.-% bezogen auf die Gesamtzusammensetzung der Dispersion. Ist in der Dispersion mehr als eine Sorte an trennaktiven Mitteln, bevorzugt Wachsen, vorhanden, beträgt der Anteil der einzelnen Sorten vorzugsweise von 0,05 bis 10 Gew.-%, bevorzugt 0,1 bis 7,5 und besonders bevorzugt 0,2 bis 5,5 Gew.-% bezogen auf die Gesamtzusammensetzung der Dispersion.

Je nach Verwendungszweck können die Dispersionen weitere Bestandteile aufweisen. Werden die erfindungsgemäßen Dispersionen als Trennmittel bei der Herstellung von Polyurethan(schaum)formkörpern eingesetzt kann es vorteilhaft sein, wenn die Dispersionen einen oder mehrere Katalysatoren, ein oder mehrere Additive zur Beeinflussung der Schaumeigenschaften und/oder ein oder mehrere Schaumstabilisatoren aufweisen.

Bevorzugte Katalysatoren sind Substanzen, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, sowie Metall-haltige Verbindungen wie beispielsweise Zinnverbindungen wie Dibutylzinndilaurat, Dioctylzinnbis (mercaptoessigsäure-2-ethylhexylester), Dimethylzinndi-neodecanoat oder Zinn-II-2-ethylhexanoat und Kaliumsalze, wie Kaliumacetat und Kalium-2-ethylhexanoat. Geeignete Katalysatoren sind beispielsweise in DE 102007046860, EP 1985642, EP 1985644, EP 1977825, US 2008/0234402, EP 0656382 B1 und US 2007/0282026 und den darin zitierten Patentschriften genannt. Statt Zinn-haltige Katalysatoren können auch Bismuth-haltige Katalysatoren eingesetzt werden. Besonders bevorzugte Bismuth-haltige Verbindungen sind z. B. Bi(III)trisisononanoat, Bi(III)trisneodecanoat, Bitris(2-ethylhexanoat oder Bi(III)trisoctoat.

Die Summe der Masse der eingesetzten Katalysatoren richtet sich nach dem Typ des Katalysators und liegt vorzugsweise im Bereich von 0,05 bis 5 Gew.-%, bevorzugt 0,1 bis 2 Gew.-% bezogen auf die Gesamtzusammensetzung der Dispersion.

Zur Beeinflussung der Schaumeigenschaften von Polyurethanschäumen können der erfindungsgemäßen Dispersion Additive beigegeben werden. Solche Additive können insbesondere Siloxane bzw. organomodifizierte Siloxane sein, wobei die im Stand der Technik genannten Substanzen verwendet werden können. Vorzugsweise werden solche Verbindungen eingesetzt, die für den jeweiligen Schaumtypen (Hartschäume, Heissweichschäume, viskoelastische Schäume, Esterschäume, HR-Schäume, halbharte Schäume) besonders geeignet sind. Geeignete (organomodifizierte) Siloxane sind beispielsweise in den folgenden Schriften beschrieben: EP 0839852, EP 1544235, DE 10 2004 001 408, EP 0839852, WO 2005/118668, US 20070072951, DE 2533074, EP 1537159 EP 533202, US 3933695, EP 0780414, DE 4239054, DE 4229402, EP 867465. Die Herstellung dieser Verbindungen kann wie im Stand der Technik beschrieben erfolgen. Geeignete Beispiele sind z. B. in US 4,147,847, EP 0493836 und US 4,855,379 beschrieben.

Als (Schaum-)stabilisatoren können alle aus dem Stand der Technik bekannten Stabilisatoren eingesetzt werden. Bevorzugt werden Schaumstabilisatoren auf der Basis von Polydialkylsiloxan-Polyoxyalkylen-copolymeren, wie sie allgemein bei Herstellung von Urethanschaumstoffen verwendet werden, eingesetzt. Diese Verbindungen sind vorzugsweise so aufgebaut, dass z. B. ein langkettiges Copolymerisat aus Ethylen- und Propylenoxid mit einem Polydimethylsiloxanrest verbunden ist. Die Verknüpfung zwischen dem Polydialkylsiloxan und dem Polyetherteil kann dabei über eine SiC-Verknüpfung oder eine Si-O-C-Bindung erfolgen. Strukturell kann der oder können die unterschiedlichen Polyether terminal oder seitenständig an das Polydialkylsiloxan gebunden sein. Der Alkylrest oder die verschiedenen Alkylreste können dabei aliphatisch, cycloaliphatisch oder aromatisch sein. Ganz besonders vorteilhaft sind dabei Methylgruppen. Das Polydialkylsiloxan kann dabei linear sein oder auch Verzweigungen enthalten. Geeignete Stabilisatoren, insbesondere Schaumstabilisatoren sind unter anderem in US 2834748, US2917480 sowie in US3629308 beschrieben. Geeignete Stabilisatoren können von der Evonik Industries AG unter dem Handelsnamen TEGOSTAB® oder von Air Products unter der Bezeichnung DC® bezogen werden.

Die Summe der Masse der eingesetzten Additive und Schaumstabilisatoren richtet sich nach dem Typ des herzustellenden Polyurethan(schaum)formkörpers und liegt vorzugsweise im Bereich von 0,05 bis 5 Gew.-%, bevorzugt 0,1 bis 2,5 Gew.-% bezogen auf die Gesamtzusammensetzung der Dispersion.

Besonders bevorzugte erfindungsgemäße Dispersionen sind solche, bei denen der Anteil der Summe der Phasen I und II (ohne Phase(n) III) an der Dispersion vorzugsweise größer-gleich 50 Gew.-%, bevorzugt größer-gleich 80 Gew.-%, besonders bevorzugt größer-gleich 85 Gew.-% und ganz besonders bevorzugt größer-gleich 90 Gew.-% ist, die Phase II vorzugsweise Wasser ist oder enthält und die Phase I vorzugsweise ein Kohlenwasserstoff oder ein Kohlenwasserstoffgemisch ist oder enthält, die trennaktiven Mittel Wachse sind, eine Erstarrungstemperatur von 25 bis 250 °C, bevorzugt von 30 bis 200 °C und besonders bevorzugt von 40 bis 150 °C aufweisen, und ausgewählt sind aus Polyethylenwachsen, ethoxylierten Polyethylenwachsen und Mikrowachsen, der Anteil der Summe an Wachsen an der erfindungsgemäßen Dispersion vorzugsweise von 0,1 bis 20 Gew.-%, bevorzugt 1 bis 15 Gew.-% und besonders bevorzugt 2 bis 10 Gew.-% bezogen auf die Gesamtzusammensetzung der Dispersion ist, und, wenn in der Dispersion mehr als eine Sorte Wachs vorhanden ist, der Anteil der einzelnen Wachssorten vorzugsweise von 0,05 bis 10 Gew.-%, bevorzugt 0,1 bis 7,5 und besonders bevorzugt 0,2 bis 5,5 Gew.-% bezogen auf die Gesamtzusammensetzung der Dispersion beträgt. Es kann vorteilhaft sein, wenn diese besonders bevorzugten erfindungsgemäßen Dispersionen einen oder mehrere Katalysatoren, ausgewählt aus Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol, Bis(dimethylaminoethyl)ether, Dibutylzinndilaurat, Zinn-II-2-ethylhexanoat, Kaliumacetat und Kalium-2-ethylhexanoat, wobei die Summe der Masse der eingesetzten Katalysatoren im Bereich von 0,05 bis 5 Gew.-%, bevorzugt 0,1 bis 2 Gew.-% bezogen auf die Gesamtzusammensetzung der Dispersion liegt, ein oder mehrere Additive, ausgewählt aus Siloxanen oder organomodifizierten Siloxanen, zur Beeinflussung der Schaumeigenschaften und/oder ein oder mehrere Polydialkylsiloxan-Polyoxyalkylen-copolymere als Schaumstabilisatoren aufweisen, wobei die Summe der Masse der eingesetzten Additive und Schaumstabilisatoren vorzugsweise im Bereich von 0,05 bis 5 Gew.-%, bevorzugt 0,1 bis 2,5 Gew.-% bezogen auf die Gesamtzusammensetzung der Dispersion liegt.

Das erfindungsgemäße Verfahren zur Herstellung einer erfindungsgemäßen Dispersion zeichnet sich dadurch aus, dass eine Phase I und eine Phase II bereitgestellt wird, in beide der Phasen ein trennaktives Mittel als Phase III eindispergiert wird, und anschließend die Phasen I und II miteinander vermischt werden. Vorzugsweise werden solchen Phasen I und II eingesetzt, die bei Raumtemperatur zu nicht mehr als 0,5 Gew.-% bezogen auf die jeweils andere Phase ineinander löslich sind. Bevorzugt eingesetzte Phasen I und II sind solche wie sie oben beschrieben werden.

Als trennaktives Mittel werden in dem erfindungsgemäßen Verfahren vorzugsweise Wachse, insbesondere die oben beschriebenen Wachse, eingesetzt. Besondes bevorzugt werden als trennaktive Mittel geschmolzene(s) Wachs(e) eingesetzt.

In dem erfindungsgemäßen Verfahren wird in beide der Phasen I und II ein trennaktives Mittel als Phase III eindispergiert, und anschließend werden die Phasen I und II miteinander vermischt. Die als Phase III eindispergierten trennaktiven Mittel können gleich oder unterschiedlich sein. Die Menge der eindispergierten trennaktiven Mittel wird so gewählt, dass Dispersionen mit den oben angegebenen bevorzugten Anteilen an trennaktiven Mitteln erhalten werden.

Die Bestandteile, insbesondere die trennaktiven Mittel und/oder die Verfahrensbedingungen zur Herstellung der Phase I und/oder II, in der die Phase III dispergiert ist werden vorzugsweise jeweils so gewählt, dass die Phase I und/oder II, in welcher die Phase III dispergiert ist, für sich stabil sind. Stabil bedeutet im Rahmen der vorliegenden Erfindung, dass sich keine makroskopische Phasengrenze (mit bloßem Auge sichtbare Phasengrenze) innerhalb der ersten 24 h nach Herstellung ausbildet.

Das Vermischen der Phasen I und II, vorzugsweise in den oben angegebenen Verhältnissen, kann auf verschiedenste Weise erfolgen, so z. B. durch intensives Rühren der Dispersionen, die in einen Behälter gegeben wurden oder durch das Zusammenführen und Vermischen beider Dispersionen in einem Inliner o. ä..

Die erfindungsgemäßen Dispersionen können als Lacke, Farben, Polymerdispersionen und Trennmittel oder zur Herstellung von Lacken, Farben, Polymerdispersionen und Trennmitteln verwendet werden. Bevorzugt ist die Verwendung der Dispersionen als Trennmitteln, besonders bevorzugt als Trennmittel bei der Herstellung von Polyurethan(schaum)formkörpern, Gummiformteilen, Kompositformteilen, Metalldruckgußformteilen, Gläsern, Beton oder Lebensmitteln, ganz besonders bevorzugt als Trennmittel bei der Herstellung von Polyurethan(schaum)formkörpern. Wird die erfindungsgemäße Dispersion als Trennmittel bei der Herstellung von Polyurethan(schaum)formkörpern verwendet, so wird die erfindungsgemäße Dispersion, vorzugsweise als externes Trennmittel verwendet, also vor dem eigentlichen Formgebungsprozess in die Form gegeben. Vorzugsweise erfolgt das Aufbringen der Dispersion auf die Oberfläche der Form durch Aufsprühen.

Die erfindungsgemäßen Dispersionen weisen vorzugsweise ein charakteristisches Separationsverhalten auf, welches mittels einer Stabilitätsanalyse unter Verwendung des Stabilitätsanalysator LUMiFuge® der Firma LUM GmbH mit einer optischen Einheit, die folgende Parameter aufweist

| | |
|---|---|
| Messprinzip: | photometrisch |
| Lichtquelle: | gepulst NIR-LED, 870 nm |
| Lichtintensitätsbereich: | 0,25 bis 6 |
| Detektor: | CCD-Line, 2048 Elemente |
| Detektorlochmaske: | 14 m |
| Detektionslänge: | 25 mm |
| Extinktionsbereich: | 0,1 - 4,0 |
| Küvettenbreite: | 4,5 mm |

bestimmt werden kann.

Hierzu werden Proben der zu untersuchenden Dispersion im Massenverhältnis 1:1 mit Wasser verdünnt, kurz gerührt und schließlich in dem Stabilitätsanalysator bei 25 °C Messtemperatur gemäß der Bedienungsanleitung analysiert (1h bei 3500 U/min) und mittels der Software SEPView® (Version SEPView6) der Firma LUM GmbH ausgewertet.

Die erfindungsgemäßen Dispersionen zeigen nach der Separation über Zentrifugieren zu mindestens 3 Phasen, die als Phasen mit unterschiedlichem Transmissionsgrad (T) erkennbar sind:
Eine obere Phase 1; diese ist vorzugsweise transparent bis leicht trübe (T₁). Darunter eine nicht durchscheinende Phase 3 mit geringster Transmission (T₃), in der wiederum eine Phasengrenze sichtbar sein kann (T₃ₐ) und (T_{3b}), wobei der Transmissionsgrad beider Teil-Phasen von Phase 3 ähnlich sein kann. Unterhalb der Phase(n) 3 befindet sich Phase 2, welche im Vergleich zu Phase 3 einen höheren Transmissionsgrad (T₂) aufweist. Der Transmissionsgrad von Phase 1 und 2 kann identisch oder unterschiedlich sein, er ist jedoch in jedem Fall wesentlich höher als der Tranmissionsgrad der Phase 3. Erfindungsgemäße Dispersionen zeigen somit vorzugsweise ein Separationsverhalten bestimmt mittels LUMiFuge® der Firma LUM GmbH (1h bei 3500 U/min), bei dem für den Transmissionengrad der Phasen 1 bis 3 gilt: T₁ ≥ T₂ > T_{3,a}; T_{3,b}.

Im Unterschied dazu weisen nicht erfindungsgemäße Dispersionen unter Verwendung derselben Analysemethode ein anderes Separationsverhalten auf. Als obere Phase scheidet sich die Phase mit dem geringsten Transmissionsgrad ab (Tᵢ) Darunter befinden sich eine oder zwei Phasen, die einen höheren Transmissionsgrad als Phase i zeigen (Tᵢᵢ; Tᵢᵢᵢ) so dass für nicht erfindungsgemäße Dispersionen vorzugsweise gilt: Tᵢ < Tᵢᵢ ≤ Tᵢᵢᵢ

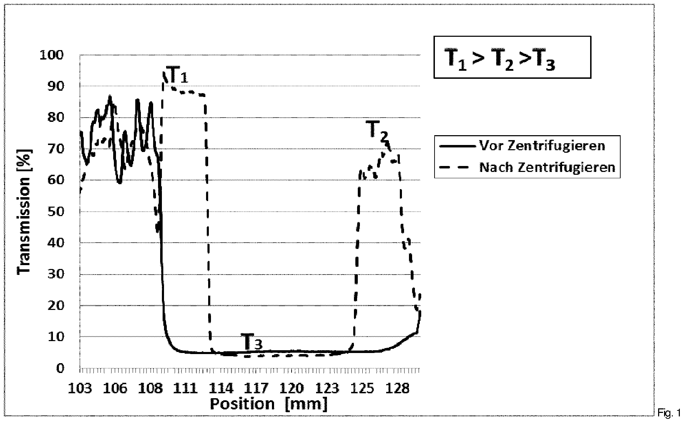

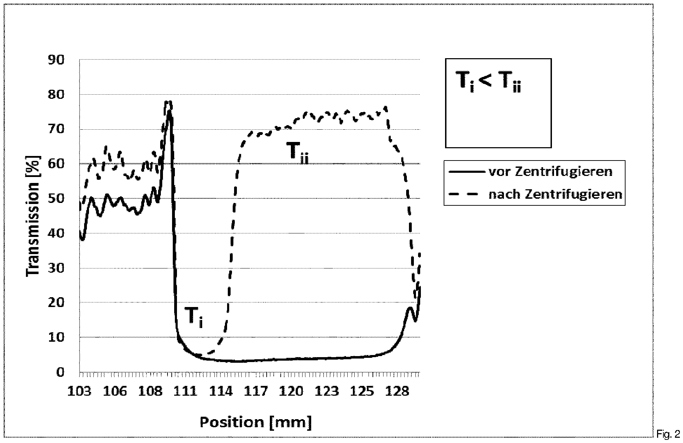

Die vorliegende Erfindung wird durch die Figuren Fig. 1 und Fig. 2 näher erläutert, ohne dass die Erfindung darauf beschränkt sein soll. In Fig. 1 wird das Transmissionsverhalten einer gemäß Beispiel 6 separierten Probe einer erfindungsgemäßen Dispersion gemäß Beispiel 1c gezeigt. Dabei ist auf der x-Achse die Position in der Messküvette in mm und auf der y-Achse die Transmission in % angegeben. In Fig. 2 wird das Transmissionsverhalten einer nicht erfindungsgemäßen Dispersion gemäß Beispiel 1d wiedergegeben.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Liste der eingesetzten Substanzen:

Polyethylenwachs = Wachs der Firma Evonik Industries AG mit einer Erstarrungstemperatur von 60 °C
Kohlenwasserstoffe = Erdölfraktion der Firma Shell mit einem Flammpunkt von 56 °C.
Kosmos 19 = Dibutylzinndilaurat (DBTL); Hersteller: Evonik Industries AG
Mikrowachs = Wachs Microwax HH der Firma Paramelt mit einer Erstarrungstemperatur von 70°C
Tegostab® B8443 = Polyethersiloxan, Hersteller: Evonik Industries AG
Marlipal 1618/11, Hersteller: Sasol Olefin & Surfactants GmbH
Genamin 16R; Hersteller: TerHell
Essigsäure, Lieferant: Brenntag
Desmophen® PU 50REII= Polyetherpolyol, Hersteller: Bayer
Tegoamin® TA 33, Hersteller: Evonik Industries AG
Diethanolamin, Hersteller: Bayer MaterialScience
Tegostab® B4113, Hersteller: Evonik Industries AG
Suprasec® X 2412, Hersteller: Huntsman

### Liste der verwendeten Geräte:

Zum Rühren wurde das Rührwerk RW 20 digital der Firma IKA mit einem zweiflügeligem Flügelrührer verwendet.
Als Rotor-Stator-Dispergieraggregat wurde ein T50 digital Ultra-Turrax mit einem S 50 N - G 45 G Dispergierwerkzeug genutzt.
Als Perlmühle wurde ein DISPERMAT® SL der Firma VMA-GETZMANN GMBH eingesetzt.
Als Hochdruckhomogenisator wurde der 2000/04-SH5 der Firma IKA verwendet.
Für die Ablauftests wurden Stahlplatten des Typs R 64 Q-Panel der Firma Q-Lab genutzt.

### Beispiel 1: Herstellung der (Trennmittel-)Dispersionen

### Beispiel 1a: Nicht erfindungsgemäßes Trennmittel

2,5 Gew.-Teile Polyethylenwachs (Erstarrungspunkt 60°C) und 2,5 Gew.-Teile Mikrowachs (Erstarrungspunkt 70°C) werden aufgeschmolzen und mit 45 Gew.-Teile Kohlenwasserstoff (Flammpunkt 56°C) versetzt. 48,5 Gew.-Teile Kohlenwasserstoff (Flammpunkt 56°C) werden mit 0,5 Gew.-Teile Dibutylzinndilaurat und 1 Gew.-Teile Tegostab® B 8443 versetzt und zu der Wachsdispersion zugegeben.

### Beispiel 1b: Nicht erfindungsgemäßes Trennmittel

2,5 Gew.-Teile Polyethylenwachs (Erstarrungspunkt 60°C) und 2,5 Gew.-Teile Mikrowachs (Erstarrungspunkt 70°C) werden aufgeschmolzen und mit 5 Gew.-Teilen ethoxyliertem Polyethylenwachs, 0,9 Gew.-Teilen Genamin 16R und 0,2 Gew.-Teilen Essigsäure versetzt. Anschließend wird die Schmelze bei 90°C in 88,9 Gew.-Teile Wasser gegeben und intensiv verrührt.

### Beispiel 1c: Erfindungsgemäßes Trennmittel

50 Gew.-% des Trennmittels aus Beispiel 1a und 50 Gew.-% des Trennmittels aus Beispiel 1b wurden in ein Becherglas gegeben und 20 Minuten intensiv bei Raumtemperatur verrührt.

### Beispiel 1d: Nicht erfindungsgemäßes Trennmittel

2,5 Gew.-Teile Polyethylenwachs (Erstarrungspunkt 60°C) und 2,5 Gew.-Teile Mikrowachs (Erstarrungspunkt 70°C) werden aufgeschmolzen mit 15 Gew.-Teile Kohlenwasserstoff (Flammpunkt 56°C) versetzt. Anschließend werden 0,9 Gew.-Teile Genamin zugegeben und die Mischung anschließend in 78,5 Gew.-Teile Wasser gegeben und intensiv verrührt. Abschließend werden 0,5 Gew.-Teile Dibutylzinndilaurat und 1 Gew.-Teile Tegostab® B 8443 in die Dispersion eingerührt

### Beispiel 1e: Nicht erfindungsgemäßes Trennmittel

2,5 Gew.-Teile Polyethylenwachs (Erstarrungspunkt 60°C) und 2,5 Gew.-Teile Mikrowachs (Erstarrungspunkt 70°C) werden aufgeschmolzen und mit 35 Gew.-Teilen Kohlenwasserstoff (Flammpunkt 56°C) versetzt. Anschließend werden 0,9 Gew.-Teile Genamin zugegeben und die Mischung anschließend in 58,5 Gew.-Teile Wasser gegeben und intensiv verrührt. Abschließend werden 0,5 Gew.-Teile Dibutylzinndilaurat und 1 Gew.-Teile Tegostab® B 8443 in die Dispersion eingerührt.

### Beispiel 1f: Nicht erfindungsgemäßes Trennmittel

2,5 Gew.-Teile Polyethylenwachs (Erstarrungspunkt 60°C) und 2,5 Gew.-Teile Mikrowachs (Erstarrungspunkt 70°C) werden aufgeschmolzen mit 55 Gew.-Teile Kohlenwasserstoff (Flammpunkt 56°C) versetzt. Anschließend werden 0,9 Gew.-Teile Genamin zugegeben und die Mischung anschließend in 38,5 Gew.-Teile Wasser gegeben und intensiv verrührt. Abschließend werden 0,5 Gew.-Teile Dibutylzinndilaurat und 1 Gew.-Teile Tegostab® B 8443 in die Dispersion eingerührt.

### Beispiel 1g: Erfindungsgemäßes Trennmittel

50 Gew.-% des Trennmittels aus Beispiel 1a und 50 Gew.-% des Trennmittels aus Beispiel 1b wurden in ein Becherglas gegeben und 30 Minuten intensiv bei Raumtemperatur mit einem Ultraturrax bei 5000 Umdrehungen/min dispergiert.

### Beispiel 1h: Erfindungsgemäßes Trennmittel

50 Gew.-% des Trennmittels aus Beispiel 1a und 50 Gew.-% des Trennmittels aus Beispiel 1b wurden in einer Perlmühle (Rotor-Spaltrohr-Trenneinrichtung, Zirkoniumperlen 2 Mikrometer) 45 Minuten intensiv bei Raumtemperatur dispergiert.

### Beispiel 1i: Erfindungsgemäßes Trennmittel

50 Gew.-% des Trennmittels aus Beispiel 1a und 50 Gew.-% des Trennmittels aus Beispiel 1b wurden mit einem Hochdruckhomogenisator (1000 bar, 20l/h) 45 Minuten intensiv bei Raumtemperatur dispergiert.

### Beispiel 1j: Erfindungsgemäßes Trennmittel

30 Gew.-% des Trennmittels aus Beispiel 1a und 70 Gew.-% des Trennmittels aus Beispiel 1b wurden 45 Minuten intensiv bei Raumtemperatur mit einem Rührwerk mit zweiflügeligem Flügelrührer dispergiert.

### Beispiel 1k: Erfindungsgemäßes Trennmittel

70 Gew.-% des Trennmittels aus Beispiel 1a und 30 Gew.-% des Trennmittels aus Beispiel 1b wurden 45 Minuten intensiv bei Raumtemperatur mit einem Rührwerk mit zweiflügeligem Flügelrührer dispergiert.

### Beispiel 2: Trennversuche

Die Trennmittel gemäß den Beispielen 1a, 1b und 1c wurden mittels einer Düse in Mengen von 30 g/m² auf Metallplatten aufgetragen. Anschließend wurde ein Polyurethansystem bestehend aus 100 Gewichtsteilen Desmophen® PU 50REII, 3,5 Gewichtsteilen Wasser, 0,5 Gewichtsteilen Tegoamin® 33, 1,5 Gewichtsteilen Diethanolamin, 1 Gewichtsteil Tegostab® B4113, 78 Gewichtsteilen Suprasec® X 2412 in einer aus den Platten gebildeten Kastenform bei 55° C aufgeschäumt, wobei die Kastenform mit einer mit Trennmittel besprühten Metallplatte abgedeckt und nach Beendigung der Schaumbildung die Trennkraft und die Schaumoberfläche beurteilt wurden. Die Ergebnisse sind in Tabelle 1 angegeben.

**Tabelle 1: Bewertung der Trennmittelversuche:**

| Trennmittel | Kraft zum Abziehen der Metallplatte vom Schaum [Kg] | Beurteilung der Schaumoberfläche |
|---|---|---|
| 1a | 1,5 | Sehr ungleichmäßig, z. T. stark offenporig |
| 1b | 1,8 | Sehr ungleichmäßig, z. T. stark offenporig |
| 1c | 0,3 | Sehr gleichmäßig, nur gering offenporig |

### Beispiel 3: Dispersionsstabilität

Die Dispersionsstabilität wurde optisch eingeschätzt. Dafür wurden die Proben täglich überprüft und mit frisch hergestellten Proben verglichen. Die Ergebnisse sind in Tabelle 2 aufgelistet.

**Tabelle 2: Bewertung der Dispersionsstabilität:**

| Trennmittel | Separation bei Raumtemperatur beginnend sichtbar nach |
|---|---|
| 1a | > 20 Tagen |
| 1b | > 10 Tagen |
| 1c | > 50 Tagen |
| 1d | 5 Tagen |
| 1e | 2 Tagen |
| 1f | 1 Tag |
| 1g | > 50 Tage |
| 1h | > 50 Tage |
| 1i | > 50 Tage |
| 1j | > 50 Tage |
| 1k | > 50 Tage |

### Beispiel 4: elektrische Leitfähigkeit der Dispersionen

Der spezifische Widerstand der Dispersionen wurde mit einem Voltcraft 96 der Firma METEX gemessen. Dazu wurden der Messkopf des Gerätes bei Raumtemperatur solange in die Dispersion getaucht, bis ein konstanter Messwert abgelesen werden konnte. Die Ergebnisse sind in Tabelle 3 wiedergegeben.

**Tabelle 3: Leitfähigkeit der Dispersionen:**

| Trennmittel | Spezifischer Widerstand [MOhm/cm] |
|---|---|
| 1a | > 5 |
| 1b | 0,03 |
| 1c | > 5 |
| 1d | 0,02 |
| 1e | 0,01 |
| 1f | 0,01 |
| 1g | > 5 |
| 1h | > 5 |
| 1i | > 5 |
| 1j | 0,01 |
| 1k | > 5 |

### Beispiel 5: Filmbildung der Dispersionen

Die Filmbildung der Dispersionen wurde durch Längenmessung des Ablaufs von 0,5 ml Dispersion auf einer auf 60°C erhitzten Metallplatte bestimmt. Die Metallplatte wurde dazu in einem Winkel von 45° positioniert. Die Länge des Verlaufs wurde nach Abtrocknen des Lösemittels gemessen. Die Ergebnisse sind in Tabelle 4 angegeben.

**Tabelle 4: Ermittelte Ablauflängen**

| Trennmittel | Länge des Ablaufs in cm |
|---|---|
| 1a | 5,1 |
| 1b | 2,3 |
| 1c | 5,3 |
| 1d | 2,5 |
| 1e | 2,2 |
| 1f | 2,4 |
| 1g | 2,3 |
| 1h | 2,2 |
| 1i | 2,3 |
| 1j | 2,5 |
| 1k | 2,2 |

### Beispiel 6: Separationsverhalten nach Zentrifugieren

Zur Stabilitätsanalyse wurde der Stabilitätsanalysator LUMiFuge® der Firma LUM GmbH eingesetzt und mit den oben in der Beschreibung beschriebenen Parametern betrieben. Analysiert wurden Proben der erfindungsgemäßen Dispersion gemäß Beispiel 1c und der nicht erfindungsgemäßen Dispersion 1d.

Die Analyse der erfindungsgemäßen Dispersion gemäß Beispiel 1c führte nach der Separation durch Zentrifugieren zu mindestens 3 Phasen, die als Phasen mit unterschiedlichem Transmissionsgrad (T) erkennbar waren:
Als obere Phase schied sich die Phase 1 ab. Diese ist transparent bis leicht trübe (T₁). Darunter befand sich die nicht durchscheinende und mit geringster Transmission die Phase 3 (T₃). Innerhalb Phase 3 war wiederum eine Phasengrenze sichtbar sein. Der Transmissionsgrad beider Teil-Phasen von Phase 3 ist ähnlich. Darunter bis zum Behälterboden befand sich die Phase 2, welche im Vergleich zu Phase 3 einen höheren Transmissionsgrad aufwies (T₂).

Der Transmissionsgrad von Phase 1 und 2 war nahezu identisch, war in jedem Fall wesentlich höher als der Tranmissionsgrad der Phase 3, so dass gilt: T₁ ≥ T₂ > T_{3,a}; T_{3,b}.

Die Analyse der nicht erfindungsgemäßen Dispersion gemäß Beispiel 1d führte nach der Separation über Zentrifugieren zur Abscheidung einer oberen Phase mit dem geringsten Transmissionsgrad (Tᵢ). Direkt darunter angeordnet befand sich eine Phase, die eine höhere Transmission als Phase i zeigte (Tᵢᵢ), so dass galt: Tᵢ < Tᵢᵢ.

## Patentansprüche

1. Dispersion enthaltend ein Dispersionsmittel (Phase I) und eine disperse flüssige Phase II, **dadurch gekennzeichnet, dass** beide Phasen I und II eine weitere dispergierte Phase III enthalten und diese dispergierte Phase III ein trennaktives Mittel umfasst.

2. Dispersion nach Anspruch 1, **dadurch gekennzeichnet, dass** die zwei Phasen I und II bei Raumtemperatur zu nicht mehr als 0,5 Gew.-% bezogen auf die jeweils andere Phase ineinander löslich sind.

3. Dispersion nach Anspruch 1 oder 2, **dadurch gekennzeichnet, dass** das Massenverhältnis von Phase I zu Phase II von 0,1 zu 100 bis 100 zu 0,1 beträgt.

4. Dispersion nach Anspruch 2 oder 3, **dadurch gekennzeichnet, dass** Phase II zu mehr als 75 Gew.-% aus Wasser besteht.

5. Dispersion nach mindestens einem der Ansprüche 2 bis 4, **dadurch gekennzeichnet, dass** Phase I zu mehr als 75 Gew.-% aus einem Kohlenwasserstoff oder Kohlenwasserstoffgemisch besteht.

6. Dispersion nach einem der Ansprüche 1 bis 5, **dadurch gekennzeichnet, dass** der Anteil an Phase III in Phase I von 0,1 bis 20 Gew.-%, bevorzugt von 1 bis 7,5 Gew.-% bezogen auf die Summe aus Phase I und Phase III beträgt.

7. Dispersion nach Anspruch 6, **dadurch gekennzeichnet, dass** der Anteil an Phase III in der Phase II von 1 bis 40 Gew.-%, bevorzugt 5 bis 20 Gew.-% bezogen auf die Summe aus Phase II und Phase III beträgt.

8. Dispersion nach mindestens einem der Ansprüche 2 bis 7, **dadurch gekennzeichnet, dass** als trennaktives Mittel in Phase III ein oder mehrere Mikrowachse, Polyethylenwachse und/oder ethoxylierte Polyethylenwachse, vorzugsweise ein oder mehrere Mikrowachse und/oder ethoxylierte Polyethylenwachse enthalten ist.

9. Verfahren zur Herstellung einer Dispersion nach mindestens einem der Ansprüche 1 bis 8 **dadurch gekennzeichnet, dass** eine Phase I und eine Phase II bereitgestellt wird, in beide der Phasen I und II ein trennaktives Mittel als Phase III eindispergiert wird, und anschließend die Phasen I und II miteinander vermischt werden.

10. Verfahren nach Anspruch 9, **dadurch gekennzeichnet, dass** die zwei Phasen I und II bei Raumtemperatur zu nicht mehr als 0,5 Gew.-% bezogen auf die jeweils andere Phase ineinander löslich sind.

11. Verfahren nach Anspruch 9 oder 10, **dadurch gekennzeichnet, dass** als trennaktives Mittel ein geschmolzenes Wachs eingesetzt wird.

12. Verwendung einer Dispersion nach mindestens einem der Ansprüche 1 bis 8 als oder zur Herstellung von Lacken, Farben, Polymerdispersionen und Trennmitteln.

## Claims

1. Dispersion comprising a dispersion medium (phase I) and a disperse liquid phase II, **characterized in that** both phases I and II comprise a further dispersed phase III and this dispersed phase III comprises a release-active agent.

2. Dispersion according to Claim 1, **characterized in that** the two phases I and II at room temperature are soluble in one another to an extent of not more than 0.5 wt%, based on the respective other phase.

3. Dispersion according to Claim 1 or 2, **characterized in that** the mass ratio of phase I to phase II is from 0.1:100 to 100:0.1.

4. Dispersion according to Claim 2 or 3, **characterized in that** phase II consists of water to an extent of more than 75 wt%.

5. Dispersion according to at least one of Claims 2 to 4, **characterized in that** phase I consists of a hydrocarbon or hydrocarbon mixture to an extent of more than 75 wt%.

6. Dispersion according to any of Claims 1 to 5, **characterized in that** the fraction of phase III in phase I is from 0.1 to 20 wt%, preferably from 1 to 7.5 wt%, based on the sum of phase I and phase III.

7. Dispersion according to Claim 6, **characterized in that** the fraction of phase III in phase II is from 1 to 40 wt%, preferably 5 to 20 wt%, based on the sum of phase II and phase III.

8. Dispersion according to at least one of Claims 2 to 7, **characterized in that** said release-active agent in phase III comprises one or more microwaxes, polyethylene waxes and/or ethoxylated polyethylene waxes, preferably one or more microwaxes and/or ethoxylated polyethylene waxes.

9. Process for preparing a dispersion according to at least one of Claims 1 to 8, **characterized in that** a phase I and a phase II are provided, a release-active agent is dispersed as phase III into both of phases I and II, and subsequently phases I and II are mixed with one another.

10. Process according to Claim 9, **characterized in that** the two phases I and II at room temperature are soluble in one another to an extent of not more than 0.5 wt%, based on the respective other phase.

11. Process according to Claim 9 or 10, **characterized in that** a molten wax is used as release-active agent.

12. Use of a dispersion according to at least one of Claims 1 to 8 as or for the production of paints, inks, polymer dispersions and release agents.

## Revendications

1. Dispersion contenant un agent de dispersion (phase I) et une phase liquide dispersée (phase II), **caractérisée en ce que** les deux phases I et II contiennent une phase dispersée III supplémentaire et cette phase dispersée III comprend un agent à activité de séparation.

2. Dispersion selon la revendication 1, **caractérisée en ce que** les deux phases I et II ne sont pas solubles l'une dans l'autre à température ambiante à hauteur de plus de 0,5 % en poids, par rapport à l'autre phase respective.

3. Dispersion selon la revendication 1 ou 2, **caractérisée en ce que** le rapport en masse entre la phase I et la phase II est de 0,1 sur 100 à 100 sur 0,1.

4. Dispersion selon la revendication 2 ou 3, **caractérisée en ce que** la phase II est constituée par plus de 75 % en poids d'eau.

5. Dispersion selon au moins l'une quelconque des revendications 2 à 4, **caractérisée en ce que** la phase I est constituée par plus de 75 % en poids d'un hydrocarbure ou d'un mélange d'hydrocarbures.

6. Dispersion selon au moins l'une quelconque des revendications 1 à 5, **caractérisée en ce que** la proportion de phase III dans la phase I est de 0,1 à 20 % en poids, de préférence de 1 à 7,5 % en poids, par rapport à la somme de la phase I et de la phase III.

7. Dispersion selon la revendication 6, **caractérisée en ce que** la proportion de la phase III dans la phase II est de 1 à 40 % en poids, de préférence de 5 à 20 % en poids, par rapport à la somme de la phase II et de la phase III.

8. Dispersion selon au moins l'une quelconque des revendications 2 à 7, **caractérisée en ce qu'**une ou plusieurs micro-cires, cires de polyéthylène et/ou cires de polyéthylène éthoxylées, de préférence une ou plusieurs micro-cires et/ou cires de polyéthylène éthoxylées, sont contenues en tant qu'agent à activité de séparation dans la phase III.

9. Procédé de fabrication d'une dispersion selon au moins l'une quelconque des revendications 1 à 8, **caractérisé en ce qu'**une phase I et une phase II sont préparées, un agent à activité de séparation est dispersé en tant que phase III dans les deux phases I et II, puis les phases I et II sont mélangées l'une avec l'autre.

10. Procédé selon la revendication 9, **caractérisé en ce que** les deux phases I et II ne sont pas solubles l'une dans l'autre à température ambiante à hauteur de plus de 0,5 % en poids, par rapport à l'autre phase respective.

11. Procédé selon la revendication 9 ou 10, **caractérisé en ce qu'**une cire fondue est utilisée en tant qu'agent à activité de séparation.

12. Utilisation d'une dispersion selon au moins l'une quelconque des revendications 1 à 8 en tant que ou pour la fabrication de vernis, de peintures, de dispersions de polymères et d'agents de séparation.
